# EUROPEAN PATENT SPECIFICATION

(11) **EP 1 511 412 B1**
(45) Date of publication and mention of the grant of the patent: **11.01.2012**
(21) Application number: 03813484.7
(22) Date of filing: 05.06.2003
(51) Int. Cl.: A47L 9/18, B01D 47/02, B01D 50/00

(54) **SUCKING SYSTEM WITH WATER FILTERING**
SAUGSYSTEM MIT WASSERFILTERUNG
SYSTEME D'ASPIRATION A FILTRAGE A L'EAU

(30) Priority: 07.06.2002 IT RM20020325
(43) Date of publication of application: 09.03.2005
(73) Proprietor: Gioel Italia '96 S.r.l., I-38100 Trento (IT)
(72) Inventor: SVALDI, Paolo, 38100 Trento (IT)
(74) Representative: Iannone, Carlo Luigi
(86) International application number: PCT/IT2003/000356
(87) International publication number: WO 2004/060128

(56) References cited:
- EP-A- 1 112 712
- DE-A- 3 610 780
- FR-A- 2 745 169
- US-B1- 6 379 439

## Description

The present invention relates to a sucking system with water filtering.

More particularly, the invention concerns a system of the above kind allowing to obtain an air filtering quality according to the measuring rules provided by the EN 1822 rule, comparable, or better to the presently available systems, without providing outer filters.

Nowadays, panorama of products such as vacuum cleaners, liquid sucking devices, water filtering systems, systems for dust reduction, etc. is very wide and variegate.

Most known and used systems provide a device for collecting dirt by a "bag" (standard vacuum cleaner).

These systems, even very much used, are not characterised by high efficiency in dust reduction. Even in case the dust reduction is increased by the use of special additional filters, after some time the efficiency is rapidly decreased since these filters are quickly clogged, remarkably reducing the performances with respect to the new apparatuses.

Other products proposed recently are the vacuum cleaners and liquid sucking devices, i.e. dirt collectors by containers/tanks (solid/liquid sucking devices).

In both cases, it is not obtained a good efficiency as to the dust reduction capability, and even if this is obtained by the use of special outer additional filters, the same decrease of the performances already mentioned with respect to the bag apparatuses occurs.

More recently, apparatuses have been realised that, beyond the collection of the coarser dirt, also carry out an air filtering action from the particles contained therein, such as dust and micro-dusts.

Said action is carried out both by the interaction of air with special high-performances filters, comprised of particular materials blocking the exit of particles bigger than some fractions of micron (e.g. HEPA filter), and by the combination of an interaction system of air with water and the interaction of air with the above mentioned filters. In each case, the problem exists due to the fact that in any case the performances are reduced during the use of the apparatus, since the particles contained within the air clog the filter porosity, thus preventing or limiting the air flow and thus reducing the performances of the sucking system.

With the present state of the art, the systems providing water filtering can be divided into:
- Systems exploiting the Venturi system, among which apparatuses realised by the firm TPA Impex S.p.A. can be mentioned. Said systems are based on the exploitation of the Venturi system operation principle, so that, by the depression created by an air flow, water is sucked from a tank and mixed with dirty air;
- Systems providing sending dirty air flow into a tank for the collection of the water within which the mixing with the water occurs. Downward said system, a molecular mechanical system is provided, carrying out a further separation action between dirt and air humidity;
- Systems providing a first air-water interaction, thus providing more or less articulated paths in order to separate as more as it is possible water from air before ejecting the same into the environment.

It is to be noted that all the above systems can be combined in different ways each other in order to exploit their advantageous peculiarities.

US 6,379,439 discloses a water vacuum cleaner according to the preamble of claim 1.

In view of the above, the Applicant has realised an innovative sucking system with water filtering allowing to solve the above mentioned drawbacks.

Main object of the present invention is that of providing a system of the above kind allowing to obtain an air filtering quality according to the measuring rules provided by the EN 1822 rule, comparable, or better to the presently available systems, without providing outer filters.

Another object of the present invention is that of providing a system of the above kind wherein the dust and micro-dust collection ability is obtained thanks to the elimination of additional filters, exploiting only the interaction between air and water.

Still another object of the present invention is that of providing a system of the above kind the dust and micro-dust collection ability remains the same all along the life of the apparatus, without the occurrence of decrease of the performances of the filter.

It is therefore specific object of the present invention a sucking system with water filtering, comprising:
- an air and dirt sucking zone from outside;
- a water, or other liquid, container, within which said sucked substance is sent, for a first air-water mixing;
- a curvilinear channel, at the outlet of said container, and within which a further air - water mixing occurs;
- a rotating dynamic separator, at the outlet of said curvilinear channel, having the effect of separating air from possible remaining particles and from the liquid;
- a motor operated turbine, within which the aeriform is made passing, before discharging the same outside;
- a conveying channel, for the liquid separated from the aeriform, within said container.

Preferably, according to the invention, air sucked from outside is made beating against a wall of the apparatus body, thus obtaining a slowering and a first separation of air from dirt having bigger dimensions.

Always according to the invention, said water, or other liquid container, provides one or more walls, creating an obligate path for the air - water mixture.

Furthermore, according to the invention, said curvilinear channel has no corners, that could cause sedimentation and flow resistance.

Still according to the invention, said rotating dynamic separator has a fin assembly, preferably comprised of 52 fins, having suitable section, provided along a cylindrical surface.

In a particularly preferred embodiment of the system according to the invention, two static labyrinth gaskets can be provided under said separator, between the separator and the body of the apparatus.

Furthermore, according to the invention, downward the air discharge toward the environment, static filters can be provided.

The present invention will be now described, for illustrative but not limitative purposes, according to its preferred embodiments, with particular reference to the figures of the enclosed drawings, wherein:
figure 1 is a first lateral left cut away view of an apparatus providing the system according to the invention;
figure 2 is a cut away front view of the apparatus of figure 1;
figure 3 is a perspective view of the tank of the apparatus of figure 1;
figure 4 is a second lateral left cut away view of an apparatus providing the system according to the invention;
figure 5 is a cut away plan view of the apparatus of figure 1;
figure 6 is a perspective view of the upper support of the motor of the apparatus of figure 1;
figure 7 is a third lateral left cut away view of an apparatus providing the system according to the invention;
figure 8 is a view similar to the view of figure 5;
figure 9 is a perspective view of a molecular separator of the system according to the invention;
figure 10 is a fourth lateral left cut away view of an apparatus providing the system according to the invention;
figure 12 is a further perspective view of the molecular separator of the system according to the invention;
figures 13a, 13b and 13c show the labyrinth gaskets of the separator of the system according to the invention;
figure 14 is a right lateral view of an apparatus providing the system according to the invention;
figure 15 is a further cut away front view of an apparatus providing a system according to the invention;
figure 16 is a further plan cut away view of an apparatus providing a system according to the invention; and
figure 17 is a further perspective view of the upper support of the motor of an apparatus providing the system according to the invention.

Observing now the figures of the enclosed drawings, it is possible to individuate the operation of the sucking system with water filtering according to the invention.

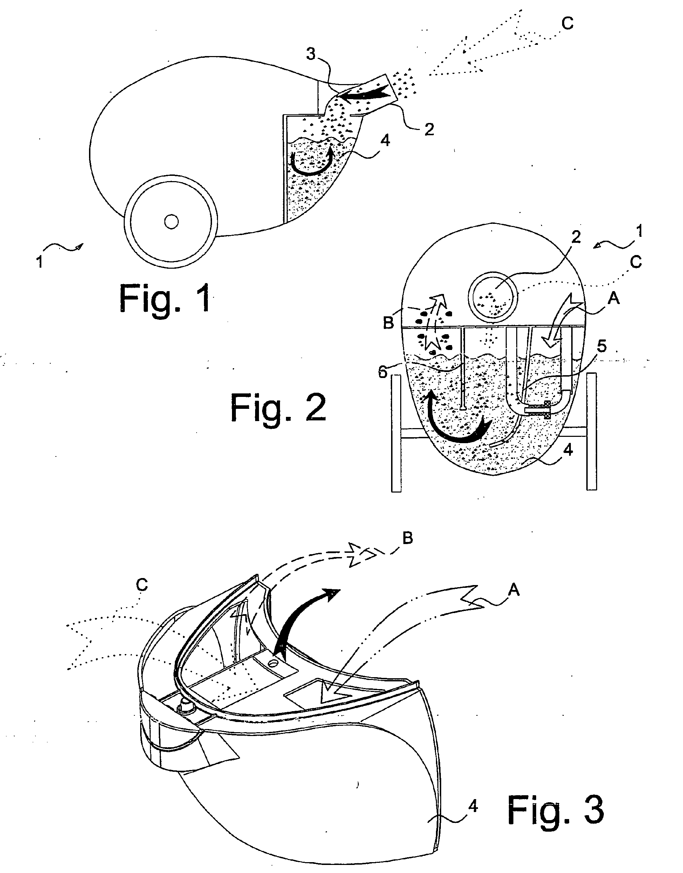

As it is clear from figure 1, air flow and dirt sucked from the surrounding environment are conveyed within the body of the apparatus 1 provided with the system according to the invention through the tube 2. Air beats first against a wall 3 of the apparatus 1, by which a slowering occurs as well as a first separation of air from sucked dirt having the largest dimensions.

Afterwards, air flow goes into the tank 4 for the collection of dirt, said tank containing water. Said tank 4 provides a separation wall 6, under which the flow is obliged to pass, in such a way to maximise the interaction.

Here the first air - water mixing occurs by interaction of the air flow sucked from outside with water contained within the tank 4. Within the tank 4 it is provided a second wall 5 creating a forced path for air.

From figure 34 it can be seen the inlet of exiting water toward channel (arrow A), and the exiting water - air mixture toward the channel (arrow B), while arrow C indicates the inlet of air and dusts from outside.

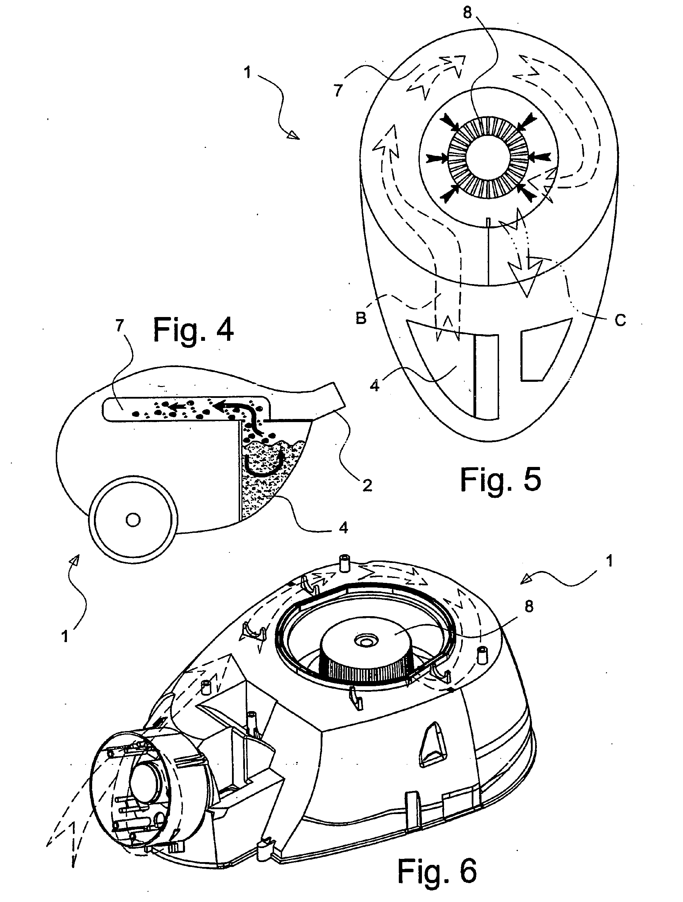

From tank 4, air flow combined with water, by the dragging effect, prosecutes through the curvilinear channel 7, where the air - water mixing action prosecutes until the flow reaches a (rotating) molecular separator 8 (see figures 4, 5 and 6).

Said channel 7 is dimensioned in such a way to allow a slowering of the air speed with a consequent increase of the air-water mixing effect, but has not corners that could cause not wished sedimentation of dirt and flow resistance,

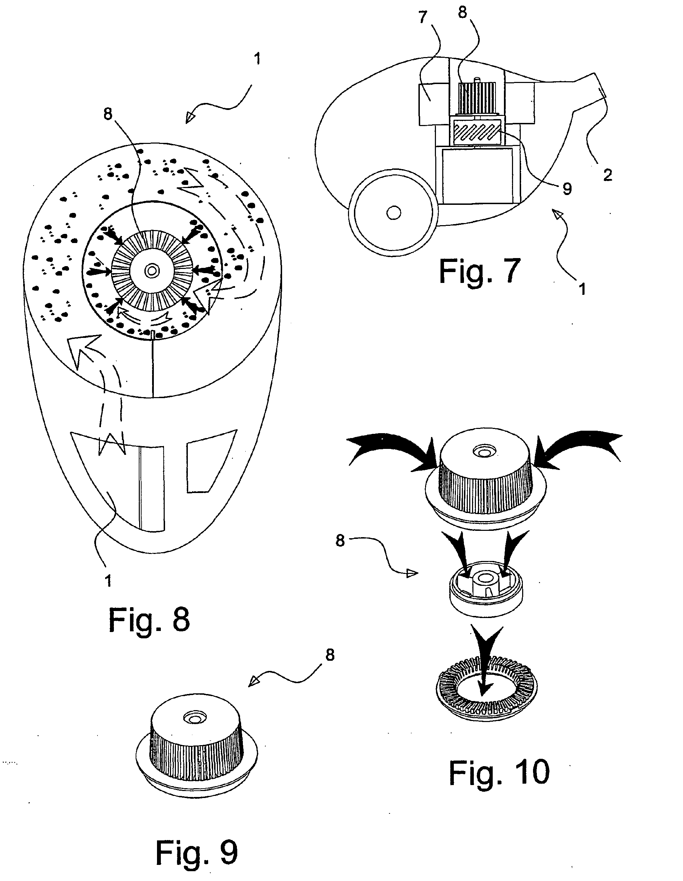

As already said, mixture at the exit of conduct 7 is made flowing toward a fan 8 (separator) (see figures 7 and 8).

Particularly, said separator 8 (see figures 9 and 10) is a rotating dynamic separator (1 ^ stage), comprised of an assembly of 52 fins having suitable sections provided along a cylindrical surface. Centrifugal action due to the separator 8, that can rotate at a speed of about 22,000 rpm, makes it possible to cause the separation of air from liquid and from possible other remaining particles. Under the molecular separator 8 the turbine 9 is provided.

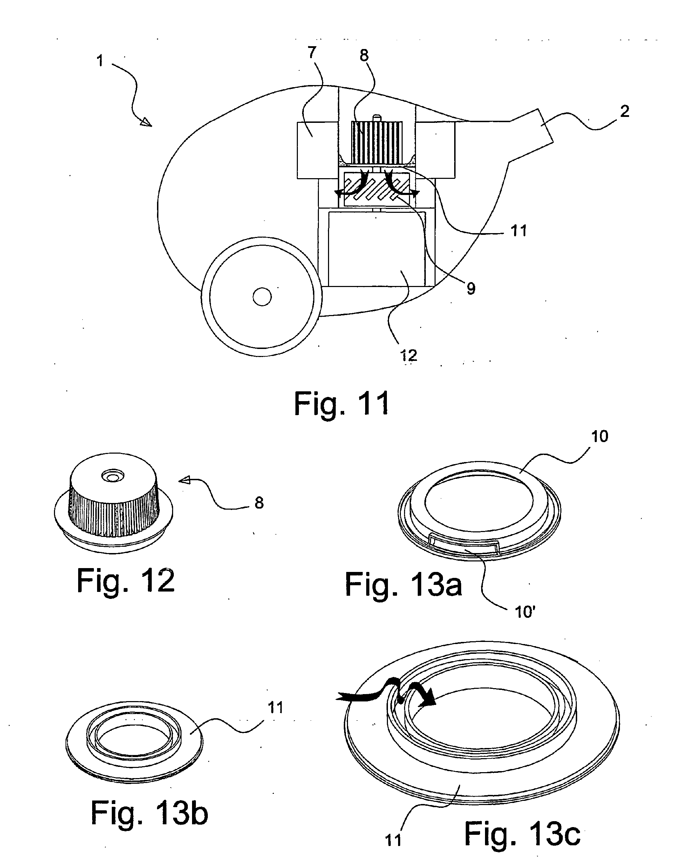

Furthermore, as it can be clearly seen from figures 11, 12 and 13, to prevent possible water infiltration between the dynamic separator 8 and the body 1, two static labyrinth gaskets 10 and 11 are provided, under the molecular separator 8.

Thanks to the particular labyrinth geometry of the gaskets 10 and 11, and thanks to the effect due to the air cushion suitably created within the same labyrinth gaskets 10 and 11, exploiting the air exit chamber, through opening 10' in the gasket 10, it is prevented that the water particles can pass into the outlet channel of the air toward the environment.

Motor 12 is provided under the turbine 9.

Aeriform, separated in this way from the liquid part and from the dust particles, thus comes in contact with the turbine 9, and must pass through a last channel part from which it is discharged in the outer environment.

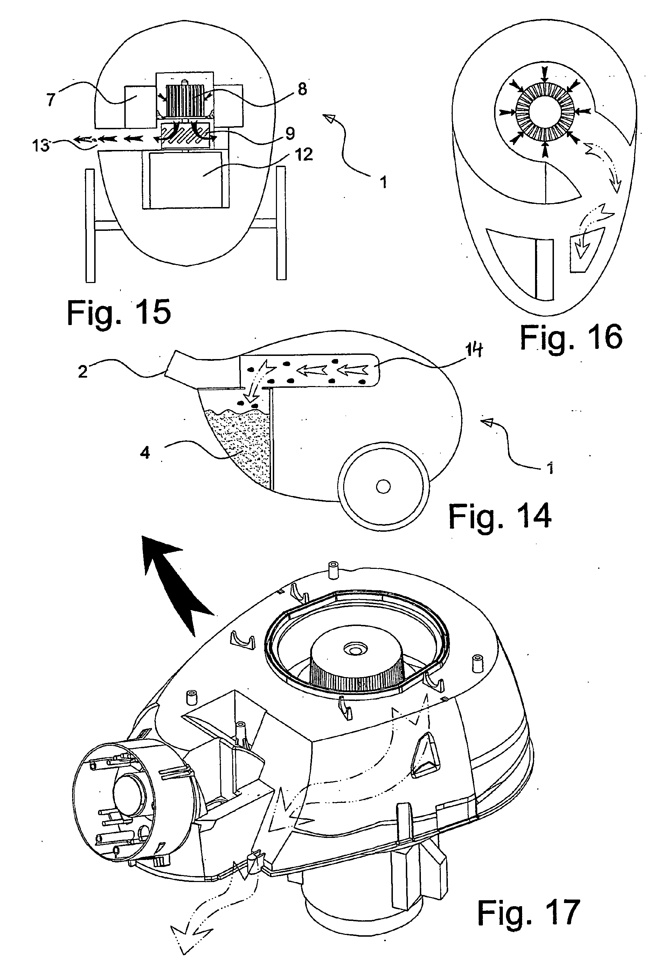

Liquid along dusts is conveyed through the conduct 14 within the reservoir for the water filter (see figure 14).

In case a high air cleaning-grade is required (e.g. in case of allergy, hospital, etc.) it is in any case possible add static filters (such as Hepa filters) placed downward the conduct 13 for the exit of the cleaned air from the apparatus 1.

Said solution allows to reach very high values of dust reduction (99,9 ... % according to EN 1822 rules), thus increasing the useful life of said filters, and thus the efficiency of the sucking system with respect to the other systems.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Sucking system with water filtering comprising :
• an air and dirt sucking zone from outside;
• a. water, or other liquid, container (4), within which said sucked substance is sent, for a first air-water mixing;
• a curvilinear channel (7), at the outlet of said container (4), and within which a further air - water mixing occurs; **characterised in that** it comprises:
• a rotating dynamic separator (8), at the outlet of said curvilinear channel (7), having the effect of separating air from possible remaining particles and from the liquid;
• a motor (12) operated turbine (9), within which the aeriform is made passing, before discharging the same outside;
• a conveying channel (14), for the liquid separated from the aeriform, within said container (4).

2. Sucking system with water filtering according to claim 1, **characterised in that** air sucked from outside is made beating against a wall (3) of the apparatus body, thus obtaining a slowering and a first separation of air from dirt having bigger dimensions.

3. Sucking system with water filtering according one of the preceding claims, **characterised in that** said water; or other liquid container (4), provides one or more walls (5,6), creating an obligate path for the air - water mixture.

4. Sucking system with water filtering according one of the preceding claims, **characterised in that** said curvilinear channel (7) has no corners, that could cause sedimentation and flow resistance.

5. Sucking system with water filtering according one of the preceding claims, **characterised in that** said rotating dynamic separator (8) has a fin assembly, preferably comprised of 52 fins, having suitable section, provided along a cylindrical surface.

6. Sucking system with water filtering according one of the preceding claims, **characterised in that** two static labyrinth gaskets (10,11) are provided under said separator (8), between the separator and the body of the apparatus.

7. Sucking system with water filtering according one of the preceding claims, **characterised in that** downward the air discharge (13) toward the environment, static filters are provided.

## Patentansprüche

1. Saugsystem mit Wasserfilterung, umfassend:
• eine Luft- und Schmutzsaugzone von außerhalb;
• einen Behälter (4) für Wasser oder eine andere Flüssigkeit, innerhalb den die angesaugte Substanz gesandt wird für eine erste Luft-Wasser-Vermischung;
• einen gekrümmten Kanal (7) an dem Auslass des Behälters (4) und in dem eine weitere Luft-Wasser-Vermischung stattfindet; **dadurch gekennzeichnet, dass** es umfasst:
• einen Drehdynamikseparator (8) an dem Auslass des gekrümmten Kanals (7) mit der Separierwirkung Luft von möglichen verbleibenden Partikeln und von der Flüssigkeit;
• eine Motor (12) betriebene Turbine (9), innerhalb der die Gasform passiert vor Abgabe derselben nach außen;
• einen Transportkanal (14) für die von der Gasform separierte Flüssigkeit innerhalb des Behälters (4) .

2. Saugsystem mit Wasserfilterung gemäß Anspruch 1, **dadurch gekennzeichnet, dass** Luft, angesaugt von außerhalb, veranlasst wird, gegen eine Wand (3) des Vorrichtungskörpers zu stoßen, wodurch eine Verlangsamung und eine erste Separation von Luft von Schmutz mit größeren Dimensionen erhalten wird.

3. Saugsystem mit Wasserfilterung gemäß einem der vorhergehenden Ansprüche, **dadurch gekennzeichnet, dass** der Behälter (4) für Wasser oder eine andere Flüssigkeit eine oder mehrere Wände (5, 6) bereitstellt, erzeugend einen obligatorischen Pfad für die Luft-Wasser-Vermischung.

4. Saugsystem mit Wasserfilterung gemäß einem der vorhergehenden Ansprüche, **dadurch gekennzeichnet, dass** der gekrümmte Kanal (7) keine Ecken aufweist, die eine Sedimentation und einen Strömungswiderstand verursachen könnten.

5. Saugsystem mit Wasserfilterung gemäß einem der vorhergehenden Ansprüche, **dadurch gekennzeichnet, dass** der Drehdynamikseparator (8) einen Lamellenaufbau aufweist, vorzugsweise umfassend 52 Lamellen, mit geeignetem Schnitt, bereitgestellt entlang einer zylindrischen Fläche.

6. Saugsystem mit Wasserfilterung gemäß einem der vorhergehenden Ansprüche, **dadurch gekennzeichnet, dass** zwei statische Labyrinthdichtungen (10, 11) bereitgestellt sind unter dem Separator (8), zwischen dem Separator und dem Körper der Vorrichtung.

7. Saugsystem mit Wasserfilterung gemäß einem der vorhergehenden Ansprüche, **dadurch gekennzeichnet, dass** abwärts der Luftausgabe (13) zu der Umgebung hin statische Filter bereitgestellt sind.

## Revendications

1. Système d'aspiration à filtrage d'eau comprenant :
- une zone d'aspiration d'air et de saleté depuis l'extérieur ;
- un récipient (4) d'eau, ou d'un autre liquide, à l'intérieur duquel est envoyée ladite substance aspirée, pour un premier mélange air-eau;
- un canal curviligne (7), à la sortie dudit récipient (4), et dans lequel se produit un autre mélange air-eau ;
**caractérisé en ce qu'**il comprend :
- un séparateur dynamique rotatif (8), à la sortie dudit canal curviligne (7), ayant pour effet de séparer l'air d'éventuelles particules restantes et du liquide ;
- une turbine (9) actionnée par un moteur (12), par laquelle la substance aériforme est amenée à passer, avant d'être déchargée vers extérieur ;
- un canal de transport (14), pour le liquide séparé de la substance aériforme, à l'intérieur dudit récipient (4).

2. Système d'aspiration à filtrage d'eau selon la revendication 1, **caractérisé en ce que** l'air aspiré de l'extérieur est amené à heurter une paroi (3) du corps de l'appareil, ce qui produit un ralentissement et une première séparation de l'air d'avec les saletés de plus grosses dimensions.

3. Système d'aspiration à filtrage d'eau selon l'une quelconque des revendications précédentes, **caractérisé en ce que** ledit récipient (4) d'eau, ou d'un autre liquide, présente une ou plusieurs parois (5, 6), créant un passage obligé pour le mélange air-eau.

4. Système d'aspiration à filtrage d'eau selon l'une quelconque des revendications précédentes, **caractérisé en ce que** ledit canal curviligne (7) ne présente aucun coin susceptible d'être à l'origine d'une sédimentation ou d'une résistance à l'écoulement.

5. Système d'aspiration à filtrage d'eau selon l'une quelconque des revendications précédentes, **caractérisé en ce que** ledit séparateur dynamique rotatif (8) comprend un ensemble d'ailettes, constitué de préférence de 52 ailettes, de section appropriée, disposées le long d'une surface cylindrique.

6. Système d'aspiration à filtrage d'eau selon l'une quelconque des revendications précédentes, **caractérisé en ce que** deux joints labyrinthe statiques (10, 11) sont prévus sous ledit séparateur (8), entre le séparateur et le corps de l'appareil.

7. Système d'aspiration à filtrage d'eau selon l'une quelconque des revendications précédentes, **caractérisé en ce que** des filtres statiques sont prévus en amont de la décharge d'air (13) vers l'environnement.
